# DEMANDE DE BREVET EUROPEEN

(11) **EP 1 220 405 A1**
(43) Date de publication de la demande: **03.07.2002**
(21) Numéro de dépôt: 01420244.4
(22) Date de dépôt: 26.12.2001
(51) Int. Cl.: H02G 3/30

(54) **Console pour le support d'un chemin de câbles ou analogues formé d'une succession de goulottes en tôle**

(30) Priorité: 27.12.2000 FR 0017120
(71) Demandeur: Gewiss France SA, 21430 Liernais (FR)
(72) Inventeur: Bailleux, Jacques, 71400 Autun (FR)
(74) Mandataire: Myon, Gérard Jean-Pierre

(57) **Abrégé**

Cette console est formée dans un flan de tôle et comporte une partie de support (5) du chemin de câbles, ainsi que des premier (11) et deuxième (10) organes de maintien latéral du chemin de câbles, chacun formé dans le flan de tôle et s'étendant vers le haut à partir d'une extrémité de la partie de support (5).

## Description

L'invention concerne une console pour le support d'un chemin de câbles ou analogues formé de goulottes en tôle se succédant, un dispositif pour la réalisation d'un tel chemin et comportant cette console et une goulotte en tôle, ainsi qu'un chemin de câbles ou analogues comportant un tel dispositif.

Il est connu, par exemple du document FR-A-2 686 141, de réaliser un chemin de câbles en aboutant plusieurs goulottes en tôle assemblées au moyen d'éclisses. Ce chemin est généralement supporté soit par des équerres, soit par des consoles qui peuvent être fixées directement au mur ou montées sur des barres verticales, ce qui permet de faire cheminer plusieurs chemins les uns au-dessus des autres, ces barres verticales pouvant être soit fixées au mur soit suspendues au plafond, par exemple au moyen du dispositif divulgué dans le document FR-2 692 643. Pour fixer les goulottes en tôle sur les consoles, il est connu d'utiliser des boulons ou des pattes parfois dénommées "crapauds", dont on trouvera un exemple dans le document FR-B1-2 730 028.

Bien que ces chemins de câbles donnent pleine satisfaction à bien des égards, la Demanderesse n'a de cesse de les perfectionner.

A cet égard, l'invention a pour but de réduire le coût global d'un chemin de câbles ou analogues formé d'une succession de goulottes en tôle.

A cet effet, l'invention a pour objet une console pour le support d'un chemin de câbles ou analogues formé d'une succession de goulottes en tôle, cette console étant formée dans un flan de tôle et comportant une partie de support du chemin de câbles, caractérisée en ce qu'elle comporte en outre des premier et deuxième organes de maintien latéral du chemin de câbles, chacun formé dans le flan de tôle et s'étendant vers le haut à partir d'une extrémité de la partie de support.

D'autres caractéristiques avantageuses de cette console sont définies par les revendications 2 à 6 annexées.

L'invention a également pour objet un dispositif pour la réalisation d'un chemin de câbles ou analogues, ce dispositif comportant au moins une console et une goulotte en tôle, caractérisé en ce que la console est réalisée selon l'une des définitions précédentes, les organes de maintien latéral et la partie de support délimitant conjointement un passage de section intérieure sensiblement complémentaire à la section transversale, extérieure, globalement en forme de U, de la goulotte comportant deux parois latérales et un fond.

D'autres caractéristiques avantageuses de ce dispositif sont définies par les revendications 8 à 10 annexées.

En outre, l'invention a pour objet un chemin de câbles ou analogues, formé d'une succession de goulottes en tôle, caractérisé en ce qu'il comporte au moins un dispositif tel que défini ci-dessus, dont la goulotte et une autre goulotte du chemin de câbles sont aboutées, s'emboîtent l'une et l'autre dans la console dirigée dans la même direction qu'elles et sont fixées à cette console formant éclisse d'assemblage de ces deux goulottes.

L'invention sera bien comprise à la lecture de la description qui va suivre, donnée uniquement à titre d'exemple et faite en se référant aux dessins annexés, dans lesquels :
- la figure 1 est une vue en perspective d'une console conforme à l'invention ;
- la figure 2 est une vue en élévation latérale de la console de la figure 1 ;
- la figure 3 est une vue partielle, en élévation latérale, d'un dispositif conforme à l'invention comportant une goulotte en tôle et, montée dessus, la console des figures 1 et 2 représentée dans plusieurs positions ;
- la figure 4 est une vue éclatée, en perspective, d'une portion d'un chemin de câbles conforme à l'invention et incorporant le dispositif de la figure 3 ; et
- la figure 5 est une vue en perspective de la portion de chemin de câbles de la figure 4, une fois assemblée.

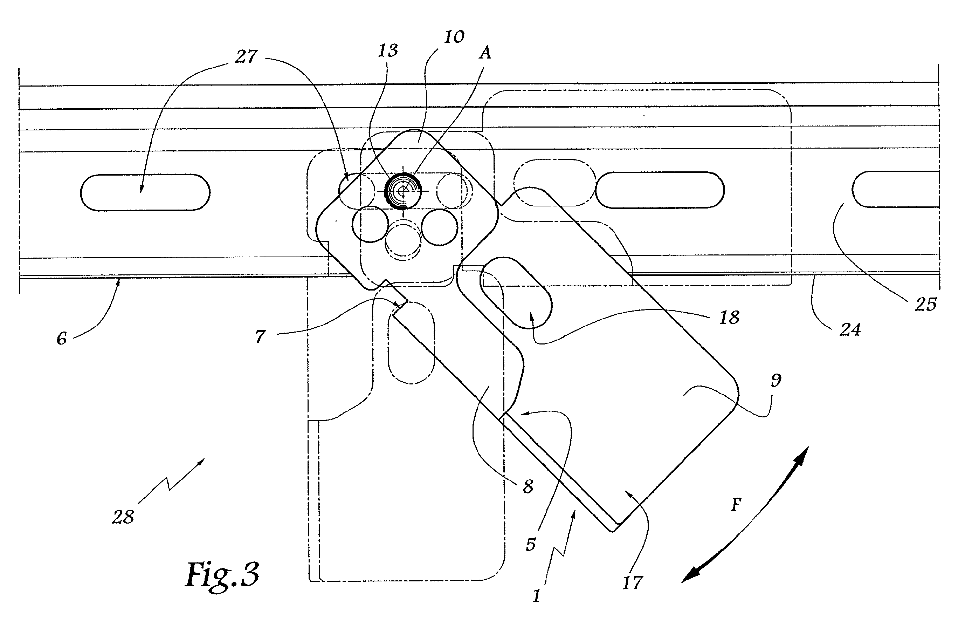

Du fait de leur longueur réelle, les goulottes représentées ne le sont que partiellement aux figures 3 à 5.

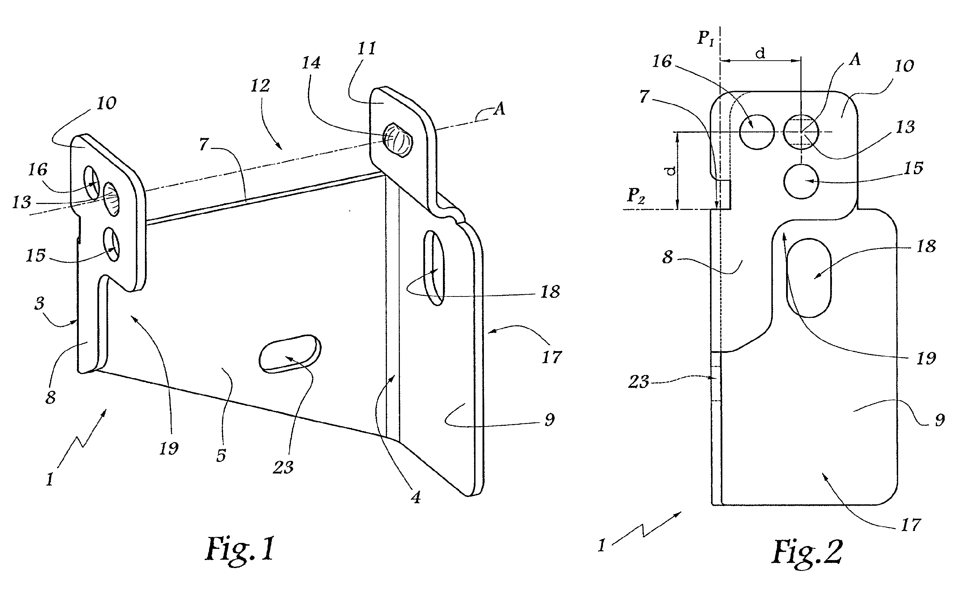

Une console conforme à l'invention est représentée aux figures 1 et 2 dans la position dans laquelle elle est destinée à être montée pour supporter un chemin de câbles.

Cette console 1 est une pièce d'un seul tenant obtenue par formage d'un flan de tôle. Deux plis verticaux 3 et 4 sont formés dans celui-ci de manière à ce que la console 1 ait globalement la forme d'un U, dont la partie centrale et trapézoïdale 5 forme support d'une goulotte en tôle 6, visible sur les figures 3 à 5 et destinée à reposer sur le bord supérieur 7 de cette partie de support 5.

Au-delà des plis 3 et 4, une aile courte 8 et une aile longue 9, parallèles entre elles et en regard, s'étendent à angle droit respectivement à partir des extrémités étroite et large de la partie de support 5. Ces deux ailes, se terminent vers le haut par deux pattes sensiblement carrées 10 et 11, qui forment organes de maintien latéral de la goulotte 6. Ces pattes 10 et 11 s'étendent vers le haut, chacune à partir d'une extrémité du bord 7 avec lequel elles délimitent un passage 12, de section rectangulaire, pour le logement de la goulotte 6 qui présente une section transversale complémentaire.

Deux bossages 13 et 14, chacun formé dans l'une des pattes 10 et 11, sont dirigés l'un vers l'autre en étant centrés sur un axe de basculement commun A, lequel est situé sensiblement à égale distance d d'un premier plan P₁, dans lequel s'étend la face de la partie de support 5 située à l'intérieur des plis 3 et 4, et d'un deuxième plan P₂ perpendiculaire au premier et passant par le bord supérieur 7. Sur la figure 2, ces plans P₁ et P₂ sont respectivement verticaux et horizontaux. A proximité de sa base, chaque bossage 13 ou 14 présente une section droite allongée selon une direction horizontale, de manière à pouvoir produire un léger blocage de la console 1 dans une position perpendiculaire à la direction des trous oblongs dans lesquels ces deux bossages sont destinés à être logés.

La patte 10 comporte en outre deux trous circulaires 15 et 16 pour la pose de boulons, percés l'un, référencé 15, en dessous du bossage 13 et l'autre, référencé 16, à côté de ce bossage 13, à la même hauteur que lui.

La portion de l'aile 9 située en dessous de la patte 11 forme embase 17 de fixation de la console 1 sur un support, et elle est percée à cet effet d'une lumière oblongue 18, dirigée verticalement et destinée au passage de la tige d'une vis non représentée de fixation de la console 1. En face de la lumière 18, l'aile 8 comporte une échancrure 19 pour le passage d'un outil, tel qu'un tourne-vis, en prise avec la tête de la vis de fixation introduite dans cette lumière 18.

La patte 11 est décalée par rapport à l'embase 17, en direction de l'organe de maintien latéral 10. Une fois montée sur la console 1, la goulotte 6 est de ce fait déportée à l'écart du mur ou du support sur lequel est fixée l'embase 17, ce qui facilite en particulier la mise en place sur la goulotte 6 d'un couvercle non représenté.

A l'opposé du bord 7, la partie de support 5 est percée d'un trou oblong et horizontal 23 pour le passage de la tige d'une vis.

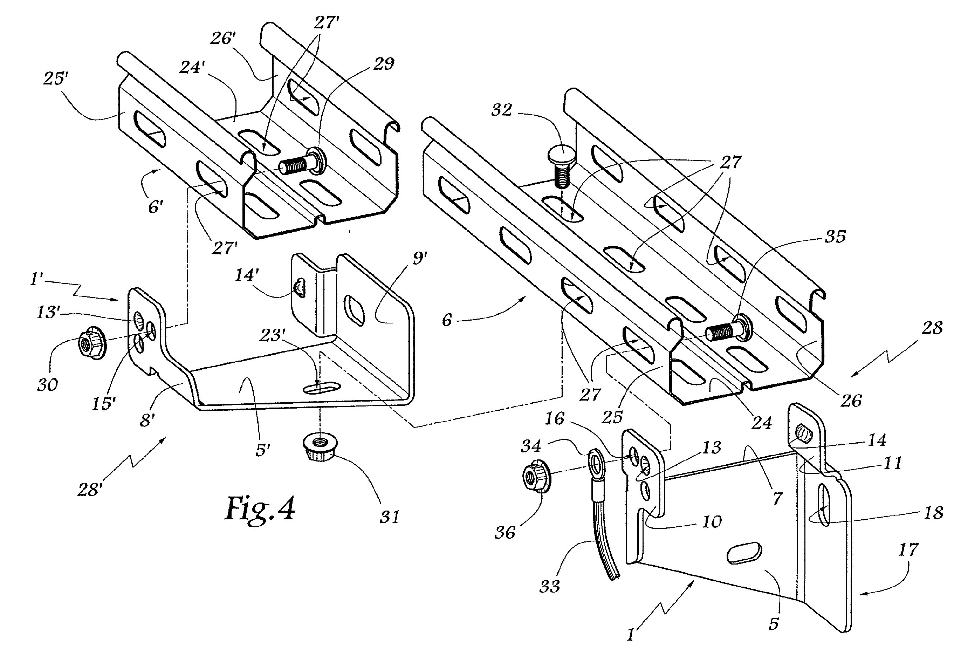

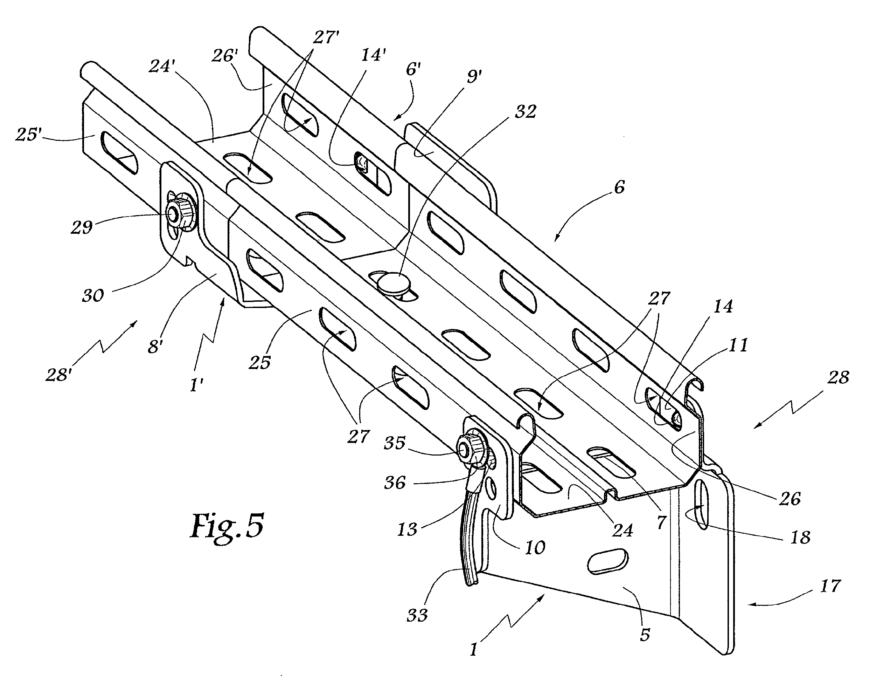

La goulotte standard 6 que la console 1 est destinée à supporter est obtenue de manière connue par formage d'une tôle perforée longitudinale et comporte un fond plat 24, à partir duquel s'étendent deux parois latérales 25 et 26, comme on peut le voir aux figures 4 et 5. Des rangées de trous oblongs 27, alignés et dirigés selon la longueur de la goulotte 6, sont percées dans le fond 24 et les parois latérales 25 et 26.

Sur la figure 3, une console 1 et une goulotte 6 encliquetée entre les deux pattes 10 et 11 de cette console 1 sont associées pour former un dispositif 28 destiné à entrer dans la construction d'un chemin de câbles ou analogues. A cet effet, les bossages 13 et 14 sont enclenchés respectivement dans deux trous oblongs 27 percés en vis-à-vis, chacun dans l'une des parois latérales 25 et 26. Ainsi montée, la console 1 peut basculer (double flèche F) autour de l'axe A, entre deux positions matérialisées par des traits mixtes sur la figure 3. Fixée sur un support dans la position verticale représentée aux figures 1 et 2, elle est apte à supporter la goulotte 6. Pour le transport, elle est en revanche avantageusement rabattue sur le fond 24 de cette goulotte 6, les ailes 8 et 9 s'étendant alors le long des parois latérales 25 et 26 respectivement.

La portion de chemin de câbles représentée aux figures 4 et 5 comporte deux dispositifs identiques à celui de la figure 3 et référencés 28 et 28' respectivement. Les éléments du dispositif 28' sont repérés par les mêmes numéros, complétés par un "prime", que les éléments identiques du dispositif 28.

Les goulottes 6 et 6' des dispositifs 28 et 28' respectivement sont mises bout-à-bout et assemblées dans cette position au moyen d'une console 1' disposée alors horizontalement de manière à former éclisse. Plus précisément, des portions d'extrémité des goulottes 6 et 6' sont logées entre les ailes 8' et 9' de la console 1' de manière à ce que les fonds respectifs 24 et 24' de ces goulottes 6 et 6' s'appliquent tous deux sur la partie de support 5' de cette console 1'. Ainsi disposée, la goulotte 6' est fixée à la console 1' par enclenchement des bossages 13' et 14' dans deux trous oblong 27, percés respectivement dans les parois latérales 25' et 26', cette fixation étant complétée par le serrage d'un boulon formé d'un écrou 30 et d'une vis 29 dont la tige passe dans le trou 15' de la console 1' et le trou oblong 27' dans lequel est également enclenché le bossage 13'. La goulotte 6 est quant à elle fixée à la console 1' au moyen d'une vis 32 et d'un écrou 31 vissé dessus, la tige de cette vis 32 passant dans le trou 23' de la console 1' et un trou oblong 27 percé dans le fond 24 de la goulotte 6.

Par ailleurs, la console 1 du dispositif 28 est fixée par son embase 17 sur un support non représenté, tel qu'un mur ou une barre verticale, au moyen d'une vis également non représentée, dont la tige passe par le trou 18. La goulotte 6 est encliquetée entre les organes de maintien latéral 10 et 11 de la console 1, qui supporte la portion de chemin de câbles représentée aux figures 4 et 5. Chacun des bossages 13 et 14 est enclenché dans l'un de deux trous oblongs 27 en vis-à-vis, ce qui permet de n'employer, avantageusement, aucune visserie de fixation de la goulotte 6 sur la console 1. Le bord supérieur 7, sur lequel repose le fond 24 de la goulotte 6, est destiné à recevoir l'essentiel du poids de la portion du chemin supportée par la console 1, notamment lorsque ce chemin est chargé, les bossages 13 et 14 ne prenant en charge qu'une faible partie de ce poids.

Dans le cas où le chemin de câbles est destiné à recevoir des câbles électriques, il peut être prévu de le relier à la terre au moyen d'un câble 33 dont une extrémité est munie d'une cosse 34. Cette dernière est fixée sur la goulotte 6 au moyen d'une vis 35 et d'un écrou 36 vissé dessus, la tige de cette vis 35 passant dans le trou 16 de la console 1 et le trou oblong 27 dans lequel est enclenché le bossage 13. Ainsi disposés, la vis 35 et l'écrou 36 réalisent également un verrouillage de sécurité empêchant la goulotte 6 de s'échapper de la console 1.

Une fois les câbles ou analogues disposés dans les goulottes 6 et 6', des couvercles, non représentés, seront avantageusement placés sur celles-ci pour les fermer.

L'invention permet d'atteindre l'objectif mentionné en préambule. En effet, une première économie est réalisée sur le nombre de pièces employées pour associer le chemin de câbles ou analogues aux consoles, puisque les pattes assurent le maintien latéral des goulottes sur les consoles, ce maintien latéral étant avantageusement complété par un encliquetage.

Cette première économie s'accompagne d'une deuxième économie consécutive à une réduction du temps de pose, ladite pose étant simplifiée, car les pièces de fixation économisées n'ont en outre pas à être montées.

La suppression de certaines pièces se traduit également par une économie réalisée sur la gestion et le stockage de ces pièces.

Certaines caractéristiques additionnelles conduisent également à des économies. En particulier, la console 1 est, de par sa forme, robuste, tout en étant simple à fabriquer et en ne nécessitant que peu de matière pour sa réalisation.

De plus, la console 1 peut être rabattue sur la goulotte 6 tout en restant montée dessus. Il peut dès lors être envisagé de transporter ces deux pièces assemblées, ce qui se traduit par la gestion d'un seul stock au lieu de deux et conduit à des économies supplémentaires.

Une autre réduction des coûts obtenue par la diminution du nombre de références à gérer et à stocker est liée au fait que la console 1 est apte à être employée comme éclisse.

L'invention ne se limite pas aux modes de réalisation précédemment décrits. En particulier, les bossages 13 et 14 peuvent être formés non pas sur la console, mais dans la goulotte, des trous étant prévus dans la console pour l'encliquetage de ces bossages.

## Revendications

1. Console pour le support d'un chemin de câbles ou analogues formé d'une succession de goulottes en tôle (6), cette console étant formée dans un flan de tôle et comportant une partie (5) de support du chemin de câbles, **caractérisée** en ce le flan de tôle comporte deux plis (3, 4) sensiblement verticaux, en considération de son utilisation en console, qui délimitent entre eux ladite partie de support (5) et, au-delà d'eux, des première (9) et deuxième (8) ailes en regard, qui se terminent vers le haut respectivement par des premier (11) et deuxième (10) organes de maintien latéral du chemin de câbles, chacun desdits organes de maintien latéral (10, 11), formés dans le flan de tôle, s'étendant vers le haut à partir d'une extrémité de la partie de support (5).

2. Console selon la revendication 1, **caractérisée en ce que** la première aile (9) forme en outre embase (17) de fixation de la console.

3. Console selon la revendication 1 ou 2, **caractérisée en ce qu'**elle est percée d'au moins deux trous (15, 23) pour le passage de vis de fixation (29, 32) de deux goulottes (6, 6'), bout-à-bout, sur cette console formant éclisse d'assemblage de ces goulottes (6, 6'), ces deux trous étant disposés l'un (15) sur un organe de maintien latéral (10), l'autre (23) sur la partie de support (5), à l'opposé des organes de maintien latéral (10, 11).

4. Console selon l'une quelconque des revendications précédentes, **caractérisée en ce que** des moyens d'encliquetage (13, 14) du chemin de câbles entre les deux organes de maintien latéral (10, 11) sont formés dans ces organes de maintien latéral (10, 11) disposés en regard l'un de l'autre.

5. Console selon la revendication 4, **caractérisée en ce que** les moyens d'encliquetage comportent deux bossages (13, 14) formés chacun dans l'un des organes de maintien latéral et dirigés l'un vers l'autre.

6. Console selon la revendication 5, **caractérisée en ce que** les deux bossages (13, 14) sont centrés sur un axe de basculement commun (A), situé sensiblement à égale distance (d) d'un premier plan (P₁) dans lequel s'étend la face de la partie de support (5) située à l'intérieur des plis verticaux (3, 4) et d'un deuxième plan (P₂) perpendiculaire au premier et passant par le bord supérieur (7) de cette partie de support (5).

7. Dispositif pour la réalisation d'un chemin de câbles ou analogues, ce dispositif comportant au moins une console et une goulotte en tôle (6), **caractérisé en ce que** la console (1) est réalisée selon l'une quelconque des revendications précédentes, les organes de maintien latéral (10, 11) et la partie de support (5) délimitant conjointement un passage (12) de section intérieure sensiblement complémentaire à la section transversale, extérieure, globalement en forme de U, de la goulotte (6) comportant deux parois latérales (25, 26) et un fond (24).

8. Dispositif selon la revendication 7, **caractérisé en ce que** la goulotte (6) est apte à s'emboîter entre les première (9) et deuxième (8) ailes jusqu'à ce que la face de la partie de support (5) située à l'intérieur des plis verticaux (3, 4) porte sur le fond (24) de la goulotte (6).

9. Dispositif selon la revendication 8, **caractérisé en ce que** la console (1) est montée à basculement sur la goulotte (6) selon un axe (A) transversal à celle-ci, cet axe (A) coupant les organes de maintien latéral (10, 11) sensiblement à égale distance (d) d'un premier plan (P₁) dans lequel s'étend la face de la partie de support (5) située à l'intérieur des plis verticaux (3, 4) et d'un deuxième plan (P₂) perpendiculaire au premier et passant par le bord supérieur (7) de cette partie de support (5), de manière à ce que la console (1) puisse être rabattue contre la goulotte (6).

10. Dispositif selon la revendication 9, **caractérisé en ce qu'**il comporte des moyens de montage à basculement de la console sur la goulotte (6), qui sont formés par l'enclenchement de deux bossages (13, 14) centrés sur un axe commun (A) dans deux trous (27) en regard, les deux trous (27) étant percés dans deux éléments du groupe comprenant les deux organes de maintien latéral (10, 11) et les deux parois latérales (25, 26) de la goulotte (6), les deux bossages (13, 14) étant formés dans les deux éléments restant de ce groupe.

11. Chemin de câbles ou analogues, formé d'une succession de goulottes en tôle (6), **caractérisé en ce qu'**il comporte au moins un dispositif (28') selon l'une quelconque des revendications 8 à 10, dont la goulotte (6') et une autre goulotte (6) du chemin de câbles sont aboutées, s'emboîtent l'une et l'autre dans la console (1') dirigée dans la même direction qu'elles et sont fixées à cette console (1') formant éclisse d'assemblage de ces deux goulottes (6, 6').
